(19) Europäisches Patentamt
European Patent Office
Office européen des brevets

(11) **EP 3 376 247 A1**

(12) **EUROPEAN PATENT APPLICATION**

(43) Date of publication:
**19.09.2018 Bulletin 2018/38**

(21) Application number: **17160630.4**

(22) Date of filing: **13.03.2017**

(51) Int Cl.:
*G01S 1/66* (2006.01)      *G01S 5/08* (2006.01)
*H04W 4/02* (2018.01)      *H04W 48/08* (2009.01)
*H04W 52/24* (2009.01)      *H04W 64/00* (2009.01)
*H04B 7/06* (2006.01)      *H04B 7/0417* (2017.01)
*H04B 7/0452* (2017.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy 02610 Espoo (FI)**

(72) Inventors:
• **ATAWIA, Ramy**
  **2018 Antwerp (BE)**
• **GACANIN, Haris**
  **2018 Antwerp (BE)**

(74) Representative: **Land, Addick Adrianus Gosling et al**
  **Arnold & Siedsma**
  **Bezuidenhoutseweg 57**
  **2594 AC The Hague (NL)**

(54) **METHOD, CONTROLLER, SYSTEM AND COMPUTER PROGRAM PRODUCT FOR SPATIAL EVALUATION OF QUALITY OF SERVICE OF AN INDOOR WIRELESS NETWORK**

(57)      The present patent disclosure concerns a method for spatial evaluation of Quality of Service, QoS, of an indoor wireless network comprising an access node, the method includes controlling the access node to transmit and receive the wireless signals in a beam steering mode, selecting a direction of the beam in which the wireless signals are to be transmitted; obtaining a first data transfer rate parameter for each of the user devices connected to the access node at the selected beam direction, wherein the first data rate parameter is indicative of a rate of data transfer to the respective user devices connected at the selected beam direction by the access node; obtaining a location of each of the user devices; and estimating a QoS value for each user device based on the respective first data rate parameter.

FIG. 2C

## Description

The present patent disclosure concerns evaluation of Quality of Service of indoor wireless networks. Specific embodiments relate to a method, controller, system and computer program product for spatial evaluation of Quality of Service of an indoor wireless network.

Quality of Service (QoS) is used as a term to indicate the performance of a network, in particular related to the achieved service quality. In other words, the QoS indicates the ability of the network to deliver the data traffic with the requested data throughput. In indoor networks such as home or office networks, certain locations in the home or office may have varying levels of QoS experienced by user devices. The QoS may furthermore vary in time, due to the dynamics of user device demands, the behavior of neighboring access nodes, and changes to the wireless environment in general.

A user who is experiencing a poor QoS may complain to the operator providing the access nodes in the indoor network and/or the connection with the wider network such as the internet. It will be unknown to the operator whether the indoor network has a low QoS in general, or whether the QoS is poor in certain locations of the home or office. Obtaining a QoS map is one way to obtain spatial information of the QoS in the home or office environment.

However, in general, QoS maps are obtained by taking manual measurements of the wireless signals in the indoor environment. Such measurements are impractical, since they require an engineer or technician in the home to perform the measurements. Furthermore, due to the time variation of the QoS of the indoor wireless network, such measurements provide only a snapshot of the QoS in time, making the QoS map unreliable.

It is therefore an object of the present invention to provide a more practical way of evaluating spatial QoS information of an indoor wireless environment which takes the time variation of the QoS into account.

According to a first aspect of the present patent disclosure, there is provided a method for spatial evaluation of Quality of Service, QoS, of an indoor wireless network, the indoor wireless network comprising an access node configured to transmit and receive wireless signals respectively to and from one or more user devices associated to the access node, the method comprising:

controlling the access node to transmit and receive the wireless signals in a beam steering mode, in which mode a beam is steered in a selected direction corresponding to a certain beam angle, wherein the beam angle is an angle of the beam relative to a predetermined direction relative to the access node;
selecting a direction of the beam in which the wireless signals are to be transmitted;
obtaining a first data transfer rate parameter for each of the user devices connected to the access node at the selected beam direction, wherein the first data rate parameter is indicative of a rate of data transfer to the respective user devices connected at the selected beam direction by the access node;
obtaining a location of each of the user devices; and
estimating a QoS value for each user device based on the respective first data rate parameter.

According to a second aspect of the present patent disclosure, there is provided a controller for spatial evaluation of Quality of Service, QoS, of an indoor wireless network, the indoor wireless network comprising an access node configured to transmit and receive wireless signals respectively to and from one or more user devices associated to the access node, wherein the controller is configured to:

control the access node to transmit and receive the wireless signals in a beam steering mode, in which mode a beam is steerable to a selected direction corresponding to a certain beam angle, wherein the beam angle is an angle of the beam relative to a certain predetermined direction relative to the access node;
select a direction of the beam in which the wireless signals are to be transmitted;
obtain a first data transfer rate parameter for each of the user devices connected to the access node at the selected beam direction, wherein the first data rate parameter is indicative of a rate of data transfer to the respective user devices connected at the selected beam direction by the access node;
obtain a location of each of the user devices; and
estimate a QoS value for each user device based on the respective first data rate parameter.

It will be understood that the controller may be configured in further embodiments for performing the method steps according to the first aspect of the present patent disclosure, and will provide the same or similar advantages as for the method steps.

According to a third aspect of the present patent disclosure, there is provided a system for spatial evaluation of Quality of Service, QoS, of an indoor wireless network, the system comprising a wireless access node, the access node comprising a fronthaul interface configured to associate one or more user devices to the access node; and one or more antennas, configured to transmit wireless signals in a beam steering mode, and the system further comprising the controller according to the second aspect and/or any embodiment of the controller disclosed in the present patent disclosure.

It will be understood that the system may be configured in further embodiments for performing the method steps according to the first aspect of the present patent disclosure, and will provide the same or similar advantages as for the method steps.

According to a further aspect, there is provided a computer program product comprising computer-executable instructions for performing any one method according to any one of the steps of any one of the embodiments disclosed above, when the program is run on a computer.

According to a further aspect, there is provided a computer program comprising computer-executable instructions to perform any one method according to any one of the steps of any one of the embodiments disclosed above, when the program is executed on a computer.

According to a further aspect, there is provided a computer device or other hardware device programmed to perform one or more steps of any one of the embodiments of the method disclosed above.

According to another aspect there is provided a data storage device encoding a program in machine-readable and machine-executable form to perform one or more steps of any one of the embodiments of the method disclosed above.

According to a further aspect, there is provided a computer program product comprising computer-executable instructions for performing the method of any one method according to any one of the steps of any one of the embodiments disclosed above, when the program is run on a computer.

Further aspects of the present patent disclosure are described by the dependent claims. The features from the dependent claims, features of any of the independent claims and any features of the other dependent claims may be combined as considered appropriate to the person of ordinary skill in the art, and not only in the particular combinations as defined by the claims.

Brief description of figures

The accompanying drawings are used to illustrate presently preferred non-limiting exemplary embodiments of methods and devices of the present patent disclosure. The above and other advantages of the features and objects of the present patent disclosure will become more apparent and the present patent disclosure will be better understood from the following detailed description when read in conjunction with the accompanying drawings, in which:

Figure 1A schematically illustrates a flowchart of an embodiment of a method according to the present patent disclosure;

Figure 1B schematically illustrates a preferred embodiment of obtaining a location of user devices in a method according to the present patent disclosure;

Figure 1C schematically illustrates a flowchart of a further embodiment of a method according to the present patent disclosure;

Figure 2A schematically illustrates an indoor environment with a wireless access node being controlled in a beam steering mode at a first angle in a method according to embodiments of the present patent disclosure;

Figure 2B schematically illustrates an indoor environment with a wireless access node being controlled in a beam steering mode at a second angle in a method according to embodiments of the present patent disclosure;

Figure 2C schematically illustrates an indoor environment with a wireless access node being controlled in a beam steering mode at a third angle in a method according to embodiments of the present patent disclosure;

Figure 2D schematically illustrates an indoor environment with a wireless access node being controlled in a normal mode in a method according to embodiments of the present patent disclosure.

Figure 3 schematically illustrates a system comprising an access node and a controller according to embodiments of the present patent disclosure.

Description of embodiments

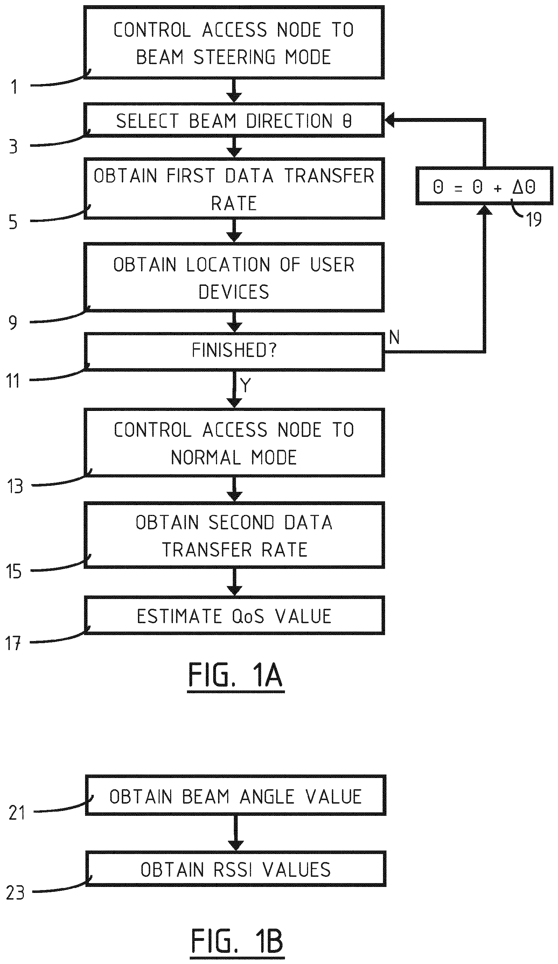

Figure 1A shows an embodiment of a method according to the present patent disclosure for spatial evaluation of Quality of Service, QoS, of an indoor wireless network, the indoor wireless network comprising an access node configured to transmit and receive wireless signals respectively to and from one or more user devices associated to the access node.

Step 1 is the step of controlling the access node to transmit and receive the wireless signals in a beam steering mode, in which mode a beam is steered in a selected direction corresponding to a certain beam angle, wherein the beam angle is an angle of the beam relative to a predetermined direction relative to the access node. The predetermined direction relative to the access node may be any suitable direction, as long as a direction is available compared to which the beam angle may be set.

Step 3 is the step of selecting a direction of the beam in which the wireless signals are to be transmitted. The beam direction is selected here according to an angle θ compared to the predetermined direction.

Step 5 is the step of obtaining a first data transfer rate parameter for each of the user devices connected to the access node at the selected beam direction, wherein the first data rate parameter is indicative of a rate of data transfer to the respective user devices connected at the selected beam direction by the access node. The first data transfer rate may therefore be expressed in packets per unit of time. The first data transfer rate may furthermore be expressed in Mbits/s or any other suitable unit. It will be understood that other measures are suitable for performing present method.

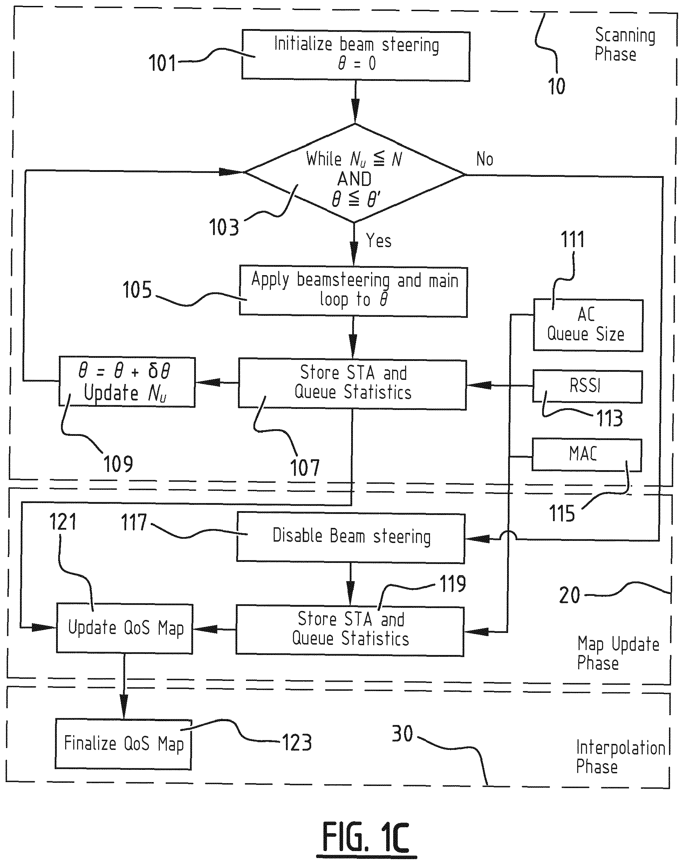

In an embodiment, the first data transfer rate is a queue size. In a preferred embodiment, the first data transfer rate is a change in queue size of the data transfer queue of the access node. Exemplary embodiments of obtaining of the change in queue size are described below in relation to Figure 1C.

Step 9 is the step of obtaining a location of each of the user devices. In this way, the obtained QoS information for each user device is linked to a location, that is, spatial QoS information becomes available.

In an embodiment, the location is an indoor position having certain coordinates for each of the user devices, which may be obtained from the user devices. However, such indoor position coordinates of user device locations are often not available.

Therefore, in the preferred embodiment of Figure 1B, step 9 of obtaining a location comprises step 21 of obtaining a beam angle value for each of the user devices corresponding to the selected beam direction at which a connection between the access node and the respective user device and step 23 of obtaining a received signal strength indicator, RSSI, for the access node from the user devices connected to the access node at the selected beam direction. In this way, a relative location of the user devices relative to the access node is obtained, based on the beam angle value and RSSI. The RSSI may have any suitable unit such as dB, dBm or mW. The RSSI values as recorded by the user devices for the access node provide an indication of the distance between the access node and user device, because a lower RSSI is obtained by user devices that are further away, than user devices that are closer to the access node.

In an embodiment, the RSSI values are converted to a distance, wherein the relative location is a distance of the user device from the access node. The distance is determined based on the RSSI as obtained by each the user device and a path loss exponent or other suitable radio propagation model.

In step 11, it is determined whether at least one of certain conditions has been met. A first condition is whether the beam angle has reached a maximum value θ' of the beam angle. The maximum beam angle value may be set according to the location of the access node in the indoor environment or the like. A further condition is that the number of user devices that have been connected to the access point at all the selected directions is equal to the total number of user devices connected to the access node when the access node is running in its normal mode of serving user devices with requested data such as from the network and/or internet, i.e. before or after performing the method with the access node. This avoids the access node being in the beam steering mode for longer times than needed.

When none of the conditions have been met, the method proceeds with step 19, wherein a new beam angle θ is determined, preferably based on the previous beam angle plus a beam angle step size Δθ. In this way, the room, apartment, office or any other environment that the access node is operating in will be scanned by the beam.

When one of the conditions for step 11 have been met, in a preferred embodiment, the method proceeds with step 13 and 15.

In an embodiment, a QoS value for each user device may be estimated based on the obtained first data transfer rate and a configured data rate indicating at what data rate the connection between the respective user device and the access node. The configured data rate may be obtained from the Modulation and Coding Scheme (MCS) index of the between the respective user device and the access node.

According to a preferred embodiment, the QoS value is determined by comparing the first data transfer rate in the beam steering mode, with a second data transfer rate determined when the access node is operating in its normal mode, that is, as it is configured to serve the user devices in its normal mode of operation. For instance, the access node may be configured to transmit the wireless signals omnidirectionally in the normal mode.

Thus, step 13 is the step of controlling the access node to transmit the wireless signals in a normal mode. In step 15, the second data transfer rate parameter for each of the user devices in the normal mode is obtained. The second data transfer rate parameter is indicative of a rate of data transfer to the respective user devices connected to the access node operating in the normal mode. The second data transfer rate may therefore be expressed in packets per unit of time. The second data transfer rate may furthermore be expressed in Mbits/s or any other suitable unit. It will be understood that other measures are suitable for performing present method.

In an embodiment, the second data transfer rate is a queue size. The larger the queue size, the more likely that a connection is slow. By comparing the queue size during the beam direction mode with the queue size during the normal mode, a QoS may be estimated. The queue size may be an average queue size during a certain period of time.

In a preferred embodiment, the second data transfer rate is a change in queue size of the data transfer queue of the access node. Exemplary embodiments of obtaining of the change in queue size are described below in relation to Figure 1C.

Thereafter, in step 17 the estimating of the QoS value is based on the difference between, and/or ratio of, the first and second data transfer rate parameters. In the normal mode, the available resources of the access node are shared among all user devices, rather than the limited number of user devices in the beam steering mode. Exemplary embodiments of determining the QoS are further described in relation to Figure 1C.

The resulting QoS values for each of the user devices are thus linked to the location of the user devices. In the preferred embodiment noted above, the QoS value will be linked to the beam angle value and RSSI value for a respective user device. In an embodiment, the method further comprises creating a QoS map indicating the QoS values as a function of location. The map can be a polar map with the beam angle values and RSSI values, or the beam angle values and RSSI values may be converted to Cartesian coordinates, as also described in more detail below. The QoS map comprises data points for each of the user devices connected to the access node, which may be sparse. Therefore, an interpolation may be performed to obtain further estimated QoS values for locations where no user device is situated. A suitable grid may be used, such as a square grid for instance having a resolution of 1 meter, or any suitable resolution depending on the available QoS data, the environment, etc.

The access node may comprise any suitable sensor to detect that it has moved, such as a magnetic sensor or acceleration sensor, such that the relative location values and QoS values can be calibrated, updated, reset, etc., according to the new position of the access node.

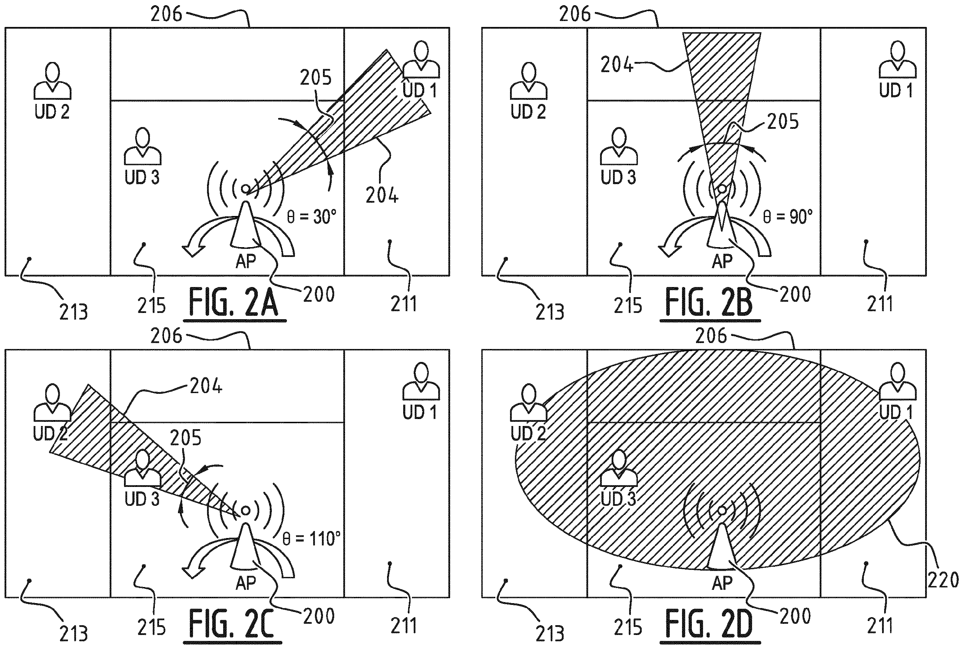

Now referring to Figure 2A, an access node 200 is located in a home or office environment 206 with several rooms 211, 213, and 215. User devices are present in the environment. User device UD1 is in room 211, user device UD 2 in room 213 and user device UD3 in room 215. The access node 200 is controlled to be in the beam steering mode, wherein a beam 204 is steered in a selected direction having a first beam angle $\theta$ = 30°. The beam furthermore has a certain angular beam width 205. A smaller angular beam width will allow for obtaining a QoS value map having a higher spatial resolution than obtained for larger angular beam widths. In the first beam angle, user device UD 1 is connected to the access node 200, and may receive data from the access node 200. The transfer queue of the access node will thus decrease in so far as the queue contained data to be transmitted to UD 1. The data to be transferred to UD 1 proceeds at a certain rate, which may be used as the first data transfer rate.

In Figure 2B the beam 204 is steered in a second direction, having an angle $\theta$ = 90°. It may be that also $\theta$ = 60° was selected previously. At the second direction, no user devices are situated such that they will be able to connect to the access node 200, due to the beam direction. Therefore, the method proceeds to further angles.

Figure 2C shows a further beam direction, having a beam angle of $\theta$ = 110°. In this direction, two user devices UD 2 and UD 3 are connected to the access node 200. To distinguish between the two users, further data regarding the individual amount of data sent to the respective users may be obtained, in order to calculate the first data transfer rate for each of UD2 and UD 3 separately. This is described in further detail below regarding Figure 1C.

In Figure 2D, the access node 200 is controlled to operate in its normal mode of operation. In this case, the access node 200 is operated in an omnidirectional mode, wherein its wireless signals 220 are directed to all user devices. In the normal mode, the second data transfer rate is obtained.

The method provides for obtaining a difference in the data rates for the user devices served in a more individual manner, i.e. the beam steering mode, and in the normal mode. Since in the latter mode the available recourses of the access node are shared, and furthermore the user devices may interfere with each other, QoS-value may be obtained. At the same time, spatial information is obtained by scanning the environment 206 with the beam 204.

In figures 2A-2D, the view of the environment is from above. The beam 204 therefore moves around the environment 206 substantially horizontally, when the beam direction is selected and the beam angle changed. The beam may be substantially covering the vertical direction of the environment, and/or the beam may also scan in up/down direction, depending on the environment, which may for instance have multiple floors, high ceilings, split floors etc.

In the embodiment of Figure 1C, the method is separated into three phases: Scanning 10, Map Update 20 and Interpolation 30.

In the scanning phase 10, the access node 200 performs the spatial scanning by beam steering. Step 101 indicates the access node 200 starting to scan by pointing the beam towards angle $\theta$ = 0. Once the scan is finished at the present angle, the beam direction angle is incrementally increase by $\Delta\theta$ to record the measurements from other beam directions, as shown in step 109.

Step 103 indicates the conditions for continuing with the scanning phase, namely as long as the angle $\theta$ is smaller than or equal to the maximum angle $\theta'$, or as long as the number of user devices scanned $N_u$, i.e. user devices to which data has been transferred at a certain angle, is smaller than the total number of user devices N currently associated to the access node.

Step 105 indicates the step of selecting a beam direction by steering the beam to angle $\theta$.

In step 107, data is collected from the user device, or more generally, station (STA), and queue statistic from the access node are stored, from which, among others, the location and the first data rate parameter of the user devices are be obtained.

In a preferred embodiment, the relative location of each user device is obtained based on the RSSI and the beam steering direction angle, this new location is suitable for application in the QoS map as coordinates ($\theta$, RSSI).

following parameters are obtained, based on suitable available standards such as the IEEE 802.11 standard and the TR-181 standard of the Broadband Forum:

 a) The average access category (AC) queue size 111 may either be obtained directly if available or may be calculated as a function of the AC queue length using the histogram of the queue of each access category that is available in the IEEE 802.11 standard and the TR-181 standard of the Broadband Forum:

 $H_i$=Device.WiFi.AccessPoint.{i}.Ae.{1}.OutQLenHistogramIntervals
 $t$ = Device.WiFi.AccessPoint.{i}.AC.{1}.OutQLenHistogramSampleInterval
 $H_v$=Device.WiFi.AccessPoint.{i}.AC.{1}.Stats.OutQLenHistogram

 Herein $H_i$ is a set of upper values for number of packets in the histogram interval. $H_v$ is the histogram of the total length of the transmit queue of AC $l$ in packets (1 packet, 2 packets, etc.) according to the intervals defined by $H_i$, with samples taken each t. Example $H_v$ : [16,6,1,2,0], which shows a decrease in the size of access queue of AC $l$. The average AC queue size each AC $l$ is the dot product of the histogram intervals $H_i$ and their values $H_v$.

 b) Received signal strength indicator (RSSI) 113:

 This RSSI is used to determine an approximate distance between the user and access node. This RSSI may further be used to distinguish between user devices when multiple user devices are able to connect to the access node at the same beam steering angle. The RSSI is remotely available through:
 RSSI = Device.WiFi.AccessPoint.{i}.AssociatedDevice.{j}. SignalStrength

 c) Modulation and Coding Scheme index (MCS):

 The MCS index indicates that maximum achievable throughput of the connection of the user devices and the access node, i.e. the link rate. The MCS may be obtained through:
 MCS = Device.WiFi.AccessPoint.{i}.AssociatedDevice.{j}.LastDataDownlinkRate

 d) User device data traffic: In case of multiple users served at the same time (i.e. on the same beam angle from the access node 200), their individual data traffic, i.e. an amount of transferred data, is obtained. Using the user device data traffic, the change in queue size for each individual user device connected at the same beam angle can be calculated, as described in further detail below. The user device data traffic is furthermore used to calculate a change in queue size for each of the user interfaces in the normal mode, e.g. omnidirectional wireless transmission. The user device traffic for each user device j is available through:

 $B_d$ [j]= Device.WiFi.AccessPoint.{i}.AssociatedDevice.{j}.Stats.BytesSent

 e) MAC address 115: The media access control address (MAC address) indicates which indoor network a user device is associated with. The MAC address may be used to track individual user devices, which is useful for the situation of more than one user device being connected at a certain beam angle. Hence, the MAC address may be used to provide a further parameter for distinguishing the user devices and QoS values.

In step 121, the first data rate parameter is obtained according to the preferred embodiment of the change in queue size, that is, the differential queue size.

For each obtained relative position ($\theta$, RSSI), the change in the queue size gives a first indication of the user device traffic (i.e. rate of delivering the data demanded by the user device). The data of the currently served users at angle $\theta$ will be transmitted from the access category queue and results in decreasing the queue size. The change in queue size at the current angle is denoted by $\delta Q_\theta$, which may be obtained by recording the queue size at different intervals during the scanning time of one angle. The different time intervals are preferably at least the time of starting and the time of ending the scanning at a certain angle. A small change in the queue size indicates that either the user device does not have data to receive (i.e. his demand is satisfied) or the user device connection conditions are poor. Whether the connection conditions are poor can be checked by the MCS value. If the change in queue size is less than the maximum achievable value at the current MCS, then the user is experiencing low QoS level. If the user is not demanding data, the MCS index value indicating the maximum achievable data rate may be used as respectively the first and second data transfer rate parameters.

In order to calibrate determining of the QoS value based on the first data rate parameter, laboratory or field measurements can be done to correlate changes in queue size at each typical MCS index when the user has the maximum QoS satisfaction.

A large change in the queue size indicates that the user has a large amount of traffic to receive from the access node 200 (i.e. there is a high risk of demand unsatisfaction).

In case of multiple users, the user device data traffic $B_d$ per user as described above will be used to calculate the share of every user in the queue size changes:

$$\delta Q \ [i = \theta, \ j{=}RSSI] = \delta Q_\theta * B_d \ [i, j] \ / \ (sum \ (B_d \ [i, j]) \ \forall \ j)$$

where j indicates the user device. Hence the ratio of the user device data traffic for individual user devices and the sum of all device data traffic at this beam angle may be taken to obtain $\delta Q$ for each user, that is, at each map-coordinate [i = $\theta$, j=RSSI]. It will be understood that also in case of single users at a certain angle, this equation may be used.

In an alternative embodiment, the first data rate parameter may be obtained by obtaining the user device data traffic $B_d$ for a respective predetermined amount of time. In this manner, the $B_d$ itself is indicative of a data transfer rate for the connection between the access node and the user device. $B_d$ may also be divided by the predetermined time to obtain a data transfer rate, for instance in Bytes/s or Mbits/s or the like. In this case, the time may also not be predetermined, as long as the time it took for the $B_d$ amount of data to be sent is known, a data transfer rate can be calculated. The same may be performed for the second data rate parameter.

Example data collected at the different beam angles of Figures 2A-2C is shown in Table 1.At $\theta$ = 110°, there is data for both UD2 and UD 3. $\delta Q$ is an array wherein each value indicates the amount of packets transferred per unit of time.

**Table 1: Example collected data in beam steering mode of Figures 2A-2C**

| $\theta$(°) | MAC | $\delta Q$ | RSSI (dBm) | MCS index |
|---|---|---|---|---|
| 30 | MAC1 | [10,0,0,0] | -70 | 4 |
| 90 | - | - | - | - |
| 110 | MAC2 | [0,30,0,0] | -80 | 1 |
| 110 | MAC3 | [0,30,0,0] | -50 | 9 |
| 180 | - | - | - | - |

Now referring to the map update phase 20, the second data rate parameters of the user devices when served in the normal mode are obtained. Therefore, the beam steering is disabled in step 117. The same values, i.e. RSSI 113, MAC address 115, and AC queue size 111 are preferably obtained also in the normal mode. The values are stored in step 119.

No again referring to step 121, the data rate parameters and QoS values are calculated, with which a QoS map may be updated. Preferably, the second data rate parameter is a change in queue size for each user. The change is queue size is obtained in the same way as described above. For each user device k connected in the normal mode (e.g. Fig. 2D), the differential queue size $\delta Q_{nm}$ is calculated according to:

$$\delta Q_{nm} \ [k] \ = \ \delta Q' * B_d \ [k] \ / \ (sum \ (B_D \ [k] \ ) \ \forall \ k = \{1,...,N\})$$

wherein $\delta Q'$ is a total change in queue size in the normal mode. k is the index of the user devices of which a MAC address was detected at i = $\theta$ and j = RSSI. A certain user device k therefore corresponds to a certain map coordinate [i = $\theta$, j=RSSI] for user device k.

The QoS value is preferably a normalized metric, which is obtained by normalizing the first data rate parameter with the second data rate parameter. In this embodiment, the differential queue size $\delta Q$ obtained in the beam steering mode is normalized with the differential queue size in the normal mode $\delta Q_{nm}$. This normal case indicates the actual experience by the users as the resources are shared among all user devices, rather than only some user devices as in the beam steering mode. For every location ($\theta$, RSSI), the QoS value is calculated according to:

$$QoS \ [i = \theta, \ j{=}RSSI] = \ 1{-} \ ((\delta Q[i,j] - \delta Q_{nm} \ ) \ / \ \delta Q[i,j])$$

Since $\delta Q[i,j]$ will be larger than $\delta Q_{nm}$, with an increasing difference between $\delta Q[i,j]$ and $\delta Q_{nm}$, the QoS is lowered. In this embodiment, the maximum QoS value is one, the minimum QoS value is zero.

In general, with an increasing difference between the first and second data rate parameters, the second being lower than the first, the QoS-value for a user device will be decreased.

Now referring to the interpolation phase 30, once the QoS is calculated in the positions available due to user devices being present there, the QoS in other positions with no users available is preferably determined by interpolation, indicated with step 123 in Figure 1C. The interpolation may be done by any suitable spatial interpolation techniques such as the k-nearest neighbor (k-nn) method or Kernel methods.

An example of using k-nn is described in the following:

a) Pick the point of interest ($\theta$, RSSI) for interpolation (i.e. location with no QoS available)
b) Calculate the distance d between this point and all the available points as:

$$d_m = \text{sqrt}(x_m^2, y_m^2) \,,$$

for each point m.

Where x and y are the relative coordinated of an existing point with QoS information and their values are obtained using polar-to-Cartesian transformation as follows:

$$x_m = (1/\text{RSSI}_m)^*\cos(\theta_m)$$

$$y_m = (1/\text{RSSI}_m)^*\sin(\theta_m)$$

Here, the RSSI is represented in the linear domain (i.e. in mW). As described above, shall the path loss exponent or any empirical propagation model formulas be available; the above equation can be computed as a function of the distance rather than the RSSI term.

c) Pick the k-points having a minimum distance d.
d) Perform weighted averaging over the QoS values calculated in step 121 for the k points:

$$\text{QoS} = \text{sum}(\text{QoS}[d_m] * (1/d_m) \ \forall \ m = \{1,...,k\})$$

With interpolation of the points in the QoS map, the points having a certain distance from each other either in polar coordinates $\theta$, RSSI or Cartesian coordinates x,y points, a final map is obtained with an overview of the wireless environment, wherein the obtained QoS-values are mapped according to the location is the environment. The map may then be used by an operator to advise users with problems related to QoS of their indoor wireless networks.

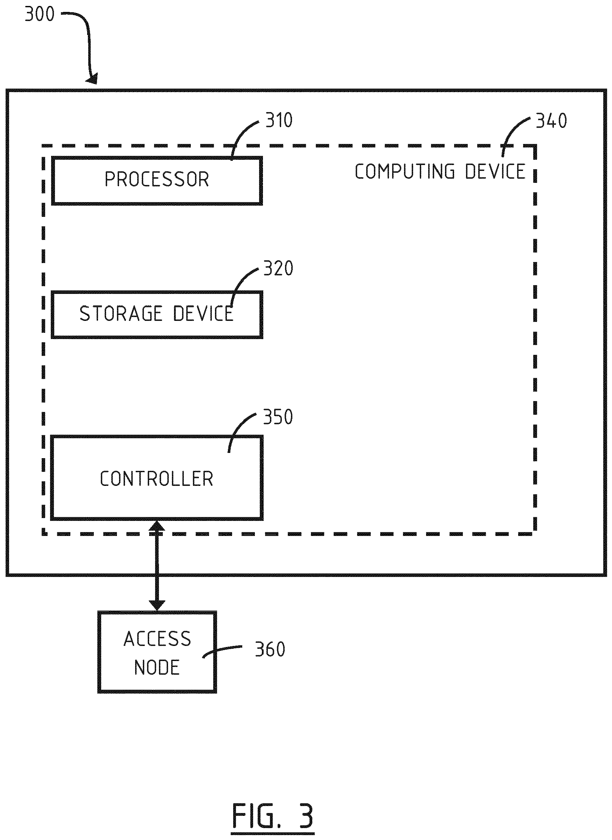

Further referring to Figure 3, an embodiment of a system 300 for spatial evaluation of QoS is illustrated, the system comprises a processor 310 configured to calculate the various parameters described above, the processor is controlled by the controller 350. The controller 350 is suitable for performing the method steps described above, and may be hardware implemented or software implemented. The controller controls the access node 360 to perform the various steps to be performed at the access node, such as controlling the access node to use the beam steering mode and the normal mode described above.

According to a preferred embodiment, the system further comprises a computing device 340 that is configured to remotely manage the access node 200 and a storage device 320 for storing a database comprising the calculated QoS values and/or maps, and further parameters used to calculate the QoS as described above may also be stored. The computing device is further configured to update the database with the obtained connection data and a time of obtaining the connection data. The processor 310, storage device 320, and/or controller 350 may be comprised in a single device, preferably the computing device 340.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1. Method for spatial evaluation of Quality of Service, QoS, of an indoor wireless network, the indoor wireless network comprising an access node configured to transmit and receive wireless signals respectively to and from one or more user devices associated to the access node, the method comprising:

   controlling the access node to transmit and receive the wireless signals in a beam steering mode, in which mode a beam is steered in a selected direction corresponding to a certain beam angle, wherein the beam angle is an angle of the beam relative to a predetermined direction relative to the access node;
   selecting a direction of the beam in which the wireless signals are to be transmitted;
   obtaining a first data transfer rate parameter for each of the user devices connected to the access node at the selected beam direction, wherein the first data rate parameter is indicative of a rate of data transfer to the respective user devices connected at the selected beam direction by the access node;
   obtaining a location of each of the user devices; and
   estimating a QoS value for each user device based on the respective first data rate parameter.

2. Method according to claim 1, further comprising:

   controlling the access node to transmit the wireless signals in a normal mode; and
   obtaining a second data transfer rate parameter for each of the user devices in the normal mode,
   wherein the estimating of the QoS value is further based on the difference between, and/or ratio of, the first and second data transfer rate parameters.

3. Method according to claim 1 or 2, wherein the location is a relative location of the user devices relative to the access node, wherein the obtaining of the location of the user devices comprises:

   obtaining a beam angle value for each of the user devices corresponding to the selected beam direction at which a connection between the access node and the respective user device; and
   obtaining a received signal strength indicator, RSSI, for the access node from the user devices connected to the access node at the selected beam direction,
   wherein the relative location based on the beam angle value and RSSI.

4. Method according to claim 3, wherein the relative location is a distance of the user device from the access node, wherein the distance is determined based on the RSSI of the user device and a path loss exponent or other radio propagation model.

5. Method according to any of claims 2-4, wherein the first and second data rate parameters are respectively first and second changes in transmit queue size of the access node for respectively the selected beam direction and normal mode, wherein the obtaining of the first and second data rate parameters comprises estimating the first and second change in transmit queue size.

6. Method according to claim 5, further comprising:

obtaining a first and second amount of transferred data for each of the user devices connected respectively in the selected beam direction and in the normal mode; and
calculating a first and second total amount of transferred data for all of the user devices, wherein the first and second changes in transmit queue size for each user device are calculated based on the ratio of the amount of transferred data for each user device to the total amount of transferred data and the change in transmit queue size of the access node.

7. Method according to claim 5 or 6, wherein the change in transmit queue size is estimated for each wireless Access Category.

8. Method according to any of the preceding claims, further comprising:

obtaining a configured data rate at which the connection between the presently connected one or more users is configured, preferably based on a modulation and coding scheme index,
wherein the QoS value is adjusted based on a comparison between the first data rate parameter and the configured data rate, the adjustment including a lowering of the estimated QoS value when the first data rate parameter is lower than the configured data rate.

9. Method according to any of the preceding claims, wherein the selecting of a beam direction occurs by changing the beam direction according to a predetermined beam angle step size and an angular width of the beam, wherein the selecting of a beam direction is iteratively performed until data has been transferred to all of the one or more user devices associated to the access node, or until the selected beam angle value exceeds a predetermined maximum beam angle value.

10. Method according to any of the preceding claims, further comprising, interpolating the QoS values for each of the user devices to obtain an estimated QoS map corresponding to an indoor environment of the indoor wireless network.

11. Method according to claim 10, wherein the interpolating is performed using one of a k-nearest neighbor algorithm and a kernel method.

12. Controller for spatial evaluation of Quality of Service, QoS, of an indoor wireless network, the indoor wireless network comprising an access node configured to transmit and receive wireless signals respectively to and from one or more user devices associated to the access node, wherein the controller is configured to:

control the access node to transmit and receive the wireless signals in a beam steering mode, in which mode a beam is steerable to a selected direction corresponding to a certain beam angle, wherein the beam angle is an angle of the beam relative to a certain predetermined direction relative to the access node;
select a direction of the beam in which the wireless signals are to be transmitted;
obtain a first data transfer rate parameter for each of the user devices connected to the access node at the selected beam direction, wherein the first data rate parameter is indicative of a rate of data transfer to the respective user devices connected at the selected beam direction by the access node;
obtain a location of each of the user devices; and
estimate a QoS value for each user device based on the respective first data rate parameter.

13. Controller according to claim 12, further configured to:

control the access node to transmit the wireless signals in a normal mode; and
obtain a second data transfer rate parameter for each of the user devices in the normal mode,,
wherein the QoS value is estimated further based on the difference between, and/or ratio of, the first and second data transfer rate parameters.

**14.** System for spatial evaluation of Quality of Service, QoS, of an indoor wireless network, the system comprising a wireless access node, the access node comprising a fronthaul interface configured to associate one or more user devices to the access node; and one or more antennas, configured to transmit wireless signals in a beam steering mode, and the system further comprising a controller according to claim 12 or 13.

**15.** A computer program product comprising a computer-executable program of instructions for performing, when executed on a computer, the steps of the method of any one of claims 1-11.

CONTROL ACCESS NODE TO
BEAM STEERING MODE

1

SELECT BEAM DIRECTION θ

3

OBTAIN FIRST DATA TRANSFER
RATE

5

$$\theta = \theta + \Delta\theta$$

19

OBTAIN LOCATION OF USER
DEVICES

9

FINISHED?

11

N

Y

CONTROL ACCESS NODE TO
NORMAL MODE

13

OBTAIN SECOND DATA
TRANSFER RATE

15

ESTIMATE QoS VALUE

17

## FIG. 1A

OBTAIN BEAM ANGLE VALUE

21

OBTAIN RSSI VALUES

23

## FIG. 1B

**FIG. 1C**

FIG. 2A

FIG. 2B

FIG. 2C

FIG. 2D

300

310 340

PROCESSOR COMPUTING DEVICE

320

STORAGE DEVICE

350

CONTROLLER

ACCESS
NODE 360

FIG. 3

Europäisches Patentamt

European Patent Office

Office européen des brevets

# EUROPEAN SEARCH REPORT

Application Number

EP 17 16 0630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/274215 A1 (EDGE STEPHEN WILLIAM [US] ET AL) 22 September 2016 (2016-09-22) | 1,3,4, 8-12,14, 15 | INV. G01S1/66 G01S5/08 |
| Y | * paragraphs [0003], [0045], [0051], | 2,13 | H04W4/02 |
| A | [0052], [0088], [0091], [0092], [0093]; figures 2-3,6 * | 5-7 | H04W48/08 H04W52/24 H04W64/00 |
| Y | US 2005/063343 A1 (HOFFMANN JOHN E [US] ET AL) 24 March 2005 (2005-03-24) * figure 11 * | 2,13 | H04B7/06 H04B7/0417 H04B7/0452 |
| A | US 2005/246334 A1 (TAO MEIXIA [CN] ET AL) 3 November 2005 (2005-11-03) * Formula (10); paragraphs [0043], [0061]; figure 5 * | 4,10,11 | |
| A | US 2008/085692 A1 (HART BRIAN DONALD [US] ET AL) 10 April 2008 (2008-04-10) * paragraph [0009]; figure 2 * | 10,11 | |

| | | | TECHNICAL FIELDS SEARCHED (IPC) |
|---|---|---|---|
| | | | G01S H04W H04B |

The present search report has been drawn up for all claims

| Place of search | Date of completion of the search | Examiner |
|---|---|---|
| Munich | 30 August 2017 | Lutz, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 0630

30-08-2017

| Patent document cited in search report | | Publication date | Patent family member(s) | | Publication date |
|---|---|---|---|---|---|
| US 2016274215 | A1 | 22-09-2016 | US 2015133173 | A1 | 14-05-2015 |
| | | | US 2016274215 | A1 | 22-09-2016 |
| | | | WO 2015027118 | A1 | 26-02-2015 |
| US 2005063343 | A1 | 24-03-2005 | AT 458331 | T | 15-03-2010 |
| | | | BR PI0411492 | A | 18-07-2006 |
| | | | CA 2529417 | A1 | 29-12-2005 |
| | | | EP 1634470 | A2 | 15-03-2006 |
| | | | JP 4560043 | B2 | 13-10-2010 |
| | | | JP 2007524277 | A | 23-08-2007 |
| | | | KR 20060023160 | A | 13-03-2006 |
| | | | KR 20070068475 | A | 29-06-2007 |
| | | | MX PA05013816 | A | 28-02-2006 |
| | | | NO 329659 | B1 | 22-11-2010 |
| | | | TW I252640 | B | 01-04-2006 |
| | | | US 2005063343 | A1 | 24-03-2005 |
| | | | WO 2004114459 | A2 | 29-12-2004 |
| US 2005246334 | A1 | 03-11-2005 | CN 1951027 | A | 18-04-2007 |
| | | | HK 1100758 | A1 | 04-05-2012 |
| | | | US 2005246334 | A1 | 03-11-2005 |
| | | | WO 2005107094 | A1 | 10-11-2005 |
| US 2008085692 | A1 | 10-04-2008 | NONE | | |

EPO FORM P0459

For more details about this annex : see Official Journal of the European Patent Office, No. 12/82